# EUROPÄISCHE PATENTANMELDUNG

(11) **EP 2 330 370 A2**
(43) Veröffentlichungstag der Anmeldung: **08.06.2011**
(21) Anmeldenummer: 09179538.5
(22) Anmeldetag: 16.12.2009
(51) Int. Cl.: F26B 17/04, F26B 3/20, F26B 5/04

(54) **Band-Trocknung mit effizienter Beheizung**

(30) Priorität: 07.12.2009 DE 102009047604; 07.12.2009 DE 102009047605
(71) Anmelder: e&e Verfahrenstechnik GmbH, 48231 Warendorf (DE)
(72) Erfinder: Schwienherr, Markus, Dipl.Ing., 48231 Warendorf (DE); Wäsche, Andreas, Dr., 48231 Warendorf (DE); Michalski, Martin, 59320 Ennigerloh (DE); Bückers, Georg, Dipl.Ing., 59320 Ennigerloh (DE)
(74) Vertreter: Wenzel & Kalkoff

(57) **Zusammenfassung**

Die Erfindung betrifft eine Vorrichtung zur Trocknung eines fluiden oder partikulären Produkts mit einem Transportband (3) zum Transport des Produktes, einer unter dem Transportband (3) vorgesehenen Kontaktheizung (4a-4d), um das Produkt beim Transport zu heizen,und einer über dem Transportband vorgesehener Strahlheizung (6a-6c), um das Produkt beim Transport zu heizen.

## Beschreibung

Die Erfindung betrifft ein Verfahren und eine Vorrichtung zur Trocknung von Fluiden sowie partikulären Produkten.

Für die Trocknung von Produkten ist der Einsatz von Bandtrocknern bekannt. Dabei wird das Produkt auf ein Transportband gegeben, auf diesem in einem Trocknungsraum bewegt und dabei getrocknet, so dass es am Ende des Transportbandes als getrocknetes Produkt aus dem Trocknungsraum entnommen werden kann. Der Trocknungsraum ist oft ein druckdichter Druckraum, so dass ein für die Trocknung geeigneter Bearbeitungsdruck vorgegeben werden kann. Insbesondere ist es bekannt, die Bandtrocknung als Vakuumtrocknung durchzuführen, bei der der Trocknungsraum ein Vakuumbehälter ist in dem gezielt eine Atmosphäre verringerten Drucks erzeugt wird, so dass der Siedepunkt bereits bei geringeren Temperaturen erreicht und so eine schonende Trocknung des Produkts ermöglicht wird. Durch gezielte Beheizung kann dabei eine hydrothermische Behandlung des Produktes erfolgen.

Die Produkte werden bei der bekannten Trocknung in partikulärer Form (d.h. stückig) oder zähflüssig als Schicht auf ein Transportband gegeben, das bspw. aus einem Gewebe oder anderem Bandmaterial besteht. Das Transportband läuft über Heizplatten, wodurch ein Energieeintrag in das Produkt erfolgt.

Es ist Aufgabe der Erfindung, eine Vorrichtung und ein Verfahren vorzuschlagen mit dem eine effiziente Trocknungsbehandlung erfolgen kann.

Die Aufgabe wird gelöst durch eine Vorrichtung nach Anspruch 1 und ein Verfahren nach Anspruch 13. Abhängige Ansprüche beziehen sich auf vorteilhafte Ausführungsformen der Erfindung.

Der Erfindung liegt die Beobachtung der Erfinder zugrunde, dass bei bekannten Trocknungsvorrichtungen insbesondere bei Produkten mit einer geringen Wärmeleitfähigkeit die Trocknung langsam erfolgt und sich insbesondere bei pastösen Produkten keine gleichmäßige Trocknung über die Schichthöhe ergibt.

Grundgedanke der vorliegenden Erfindung ist es, das Produkt nicht nur durch eine Kontaktheizung von unten, sondern - zumindest abschnittsweise über die Länge des Bandes - zusätzlich auch durch eine Strahlbeheizung von oben zu beheizen. Hierdurch wird einerseits eine besonders effiziente Durchdringung mit Heizenergie erreicht, so dass entweder eine schnellere Trocknung oder die Anwendung niedrigerer Temperaturen und damit eine schonendere Trocknung möglich ist. Andererseits wird so eine gleichmäßige Verteilung der Energie innerhalb der Schicht möglich. Zudem ist es durch gezielte Einstellung der Heizung möglich, gewünschte Eigenschaften des Produktes zu erzielen, insbesondere die Einstellung einer gewünschten Farbe, Struktur, Aroma oder eines Feuchtigkeitsgehaltes oder Schüttgewichtes.

Durch die beidseitige Beheizung ergibt sich in der Schicht ein geringeres Temperaturgefälle.

Die erfindungsgemäße Beheizung ermöglicht es, die hydrothermische Belastung zu reduzieren, dem das Produkt ausgesetzt ist. Es können geringere Heiztemperaturen verwendet werden, da eine bessere Durchdringung gewährleistet ist. Zudem können höhere Schichtdicken des Produktes auf dem Transportband verwendet werden.

Durch die separate Vorgabe von Beheizungstemperaturen von oben und unten ist eine gezielte Steuerung des hydrothermischen Prozesses möglich, die bei verschiedenen Produkten vorteilhaft ist. Dies betrifft insbesondere Produkte, die unter der Beheizung aufgehen und bei denen durch die gleichmäßige Beheizung die Bildung eines hohen Kuchens vermieden werden kann.

Erfindungsgemäß ist unter dem Transportband eine Kontaktheizung vorgesehen. Das Transportband bewegt sich über die Kontaktheizung, die bspw. als Heizplatte oder als flächiger Heizkörper vorgesehen sein kann. Erfindungsgemäß ist weiter eine Strahlheizung im Abstand oberhalb des Transportbandes vorgesehen. Durch die Strahlheizung wird das Produkt mittels Wärmestrahlung geheizt. Hierfür ist bevorzugt ein Radiator vorgesehen, der bevorzugt flächig abstrahlt. Sowohl die Kontaktheizung als auch die Strahlheizung werden bevorzugt durch Durchleitung eines Heizmediums von außerhalb des Trocknungsraums beheizt, bspw. Dampf-, Wasser-, Wärmeträgeröl oder Brüden. Ein für die Strahlheizung vorgesehener Radiator umfasst in einer bevorzugten Ausführung parallel angeordnete Rohre oder flacher Heizflächen. Diese sind bevorzugt quer zur Transportrichtung des Produkts angeordnet, um eine Streifenbildung zu vermeiden.

In einer bevorzugten Einstellung erfolgt eine Kontaktheizung mit einer Heiztemperatur im Bereich von -25°C bis 160°C und eine Strahlheizung auf einer Heiztemperatur im Bereich von -25°C bis 160°C. Dabei werden im Bereich der Gefriertrocknung die genannten niedrigen Temperaturen für die Beheizung verwendet. Bevorzugte Schichthöhen liegen bspw. im Bereich von 1-50 mm.

Bevorzugt ist ein Radiator der Strahlheizung so ausgerichtet, dass seine untere, abstrahlende Oberfläche im Wesentlichen parallel zum Produktfluss auf dem Transportband steht. Alternativ kann die Oberfläche unter einem Gefällewinkel zum Transportband stehen. Bevorzugt fließt ein Heizmedium so durch die Heizung, dass kein in Fließrichtung streifenförmiger Energieeintrag stattfindet. Die Heizflächen sind hierfür bevorzugt entsprechend geformt. Zum Beispiel können Heizplatten oder Heizrohre verwendet werden, wobei bevorzugt die Energie im Kreuz- Gegen- oder Gleichstrom zum Produktfluss fließen kann.

Der Abstand, in dem ein Radiator der Strahlheizung oberhalb des Transportbandes angeordnet wird, ist einerseits maßgeblich für den Energieeintrag. Andererseits wird der Abstand bevorzugt so gewählt, dass auch bei eventueller Ausdehnung der Schicht (bspw. "Aufkochen") die Schicht nicht den Radiator berührt, so dass Verschmutzungen vermieden werden können. Ein bevorzugtes Intervall für den Abstand ist 10-200 mm oberhalb der Fläche des Transportbandes. Weiter bevorzugt sind 20-80 mm.

Gemäß einer Weiterbildung der Erfindung ist das Transportband in einem Druckraum angeordnet, wobei mit einer Vakuumanlage ein gewünschter Bearbeitungsdruck eingestellt werden kann. Für viele Behandlungen ist hier ein Vakuumbehälter bevorzugt. Vakuum-Bearbeitungsdrücke liegen bevorzugt bei weniger als 100 mbar, für die Gefriertrocknung weiter bevorzugt bei weniger als 5 mbar. Im Trocknungsraum können auch mehrere Transportbänder übereinander angeordnet sein.

Gemäß einer Weiterbildung der Erfindung erfolgt die Behandlung über die Länge des Transportbandes in mindestens zwei Behandlungszonen. In den Behandlungszonen ist die Beheizung unterschiedlich. Dies umfasst einerseits voneinander getrennt regelbare Beheizungen in den beiden Behandlungszonen; bspw. können in beiden Behandlungszonen Kontaktheizungen vorgesehen sein, die unabhängig voneinander auf verschiedene Temperaturen regelbar sind. Andererseits umfasst die Möglichkeit der unterschiedlichen Beheizung auch, dass in den beiden Behandlungszonen verschiedene Kombinationen der Arten von Beheizungen (Kontaktheizung, Strahlheizung) vorgesehen sein können. In einer besonders bevorzugten Ausführung ist in einer ersten Behandlungszone nur eine Kontaktheizung und keine zusätzliche Strahlheizung vorgesehen. Es hat sich erwiesen, dass für eine Vielzahl von Produkten eine Strahlheizung zu Beginn des Trocknungsprozesses nicht effektiv ist, insbesondere wenn das im Produkt enthaltene Wasser in einem Siedeprozess entfernt wird. Erst in einer zweiten Behandlungszone, die in Transportrichtung des Transportbandes hinter der ersten Behandlungszone angeordnet ist, erfolgt zusätzlich zur Kontaktheizung auch eine Strahlheizung. Bevorzugt schließt die zweite Behandlungszone unmittelbar an die erste Behandlungszone an. Bevorzugt erfolgt der Übergang von der ersten in die zweite Behandlungszone dann, wenn sich bei der Trocknung des Produktes ein deutlicher Anstieg von dessen Temperatur zeigt. (Dies ist bei einem anfänglichen Siedeprozess zunächst nicht der Fall, weil hier durch Verdunstung zunächst auch eine Kühlung des Produktes erfolgt.) Von der Gesamtlänge der Behandlungszonen ist es bevorzugt so, dass nur auf einem Anteil davon, bspw. 20-80% der Gesamtlänge, eine Strahlheizung vorgesehen ist. Bevorzugt ist eine Strahlheizung über 30-70%, besonders bevorzugt über 40-60% vorgesehen.

Für das Gefriertrocknen allerdings ist es bevorzugt, die Strahlheizung über einen größeren Anteil der Gesamtlänge, bevorzugt über mehr als 60% vorzusehen. Bevorzugt erfolgt hier eine Strahlheizung auch bereits ab der ersten Behandlungszone.

Bei der Aufteilung der Behandlung in verschiedene Behandlungszonen, in denen jeweils unterschiedliche Beheizung erfolgt, wird bevorzugt ein Temperaturprofil vorgegeben. Bspw. erfolgt in einer ersten Behandlungszone nur eine Kontaktheizung, in einer zweiten Behandlungszone eine Kontaktheizung auf einer ersten Temperatur und zusätzlich eine Strahlheizung und in einer darauf folgenden dritten Behandlungszone eine Kontaktheizung mit einer zweiten, niedrigeren Temperatur (sowie optional auch eine Strahlheizung).

Gemäß einer Weiterbildung der Erfindung ist im Verlauf des Trocknungsprozesses, bevorzugt im Endbereich der Bandfläche, eine Kühlzone vorgesehen. In dieser wird bevorzugt durch Kontaktkühlung die Temperatur des Produktes verringert. Besonders bevorzugt erfolgt die Kontaktkühlung in derselben Weise wie die Kontaktheizung, d. h. durch eine unter dem Transportband vorgesehene flächige Anordnung, die in diesem Fall mit einem Wärmemedium geringerer Temperatur als das Produkt an der betreffenden Stelle versorgt wird.

Gemäß einer Weiterbildung der Erfindung umfasst die Vorrichtung eine Konditioniervorrichtung, in der das Produkt vor der Aufgabe auf das Transportband konditioniert wird. Hierunter wird die gezielte Anpassung von Eigenschaften des Produkts verstanden, bspw. Einstellung der Temperatur, Viskosität, Dichte, Homogenität, Zusammensetzung etc. Bevorzugte Beispiele für eine solche Konditionierung sind Temperatureinstellung (durch geeignete Heizung/Kühlung), bspw. zur Erreichung einer gewünschten Viskosität und/oder Gaszugabe bzw. Entgasung zur Erreichung einer gewünschten Dichte. Besonders bevorzugt wird eine solche Konditionierung bei flüssigen Produkten vor der Aufgabe auf das Transportband durchgeführt. Dabei wird das Produkt in einem oder mehreren separaten Vorprozessen in den Eigenschaften so verändert, dass ein zähflüssiges Produkt mit gewünschter Dichte und Zähigkeit entsteht, das auf das Transportband gegeben wird. Die Vorkonditionierung kann insbesondere auch eine Homogenisierung umfassen, bei der bspw. durch Umwälzung (z.B. in einem Rührwerk oder durch Umpumpen) ein homogenes Produkt erstellt wird, bei dem bspw. feste Bestandteile in einer Flüssigkeit eine Suspension bilden.

Bei einer anderen bevorzugten Konditionierung wird für einige Typen von flüssigen Produkten zur Trocknung zunächst hieraus ein gefrorenes Granulat hergestellt. Dieses wird als gefrorene dünne Granulat-Schicht auf das Transportband gegeben, wobei die Schichthöhe bevorzugt durch mindestens ein Wehr begrenzt wird. Das Granulat wird dann durch Sublimationstrocknung (Lyophilisation) getrocknet.

Andere Weiterbildungen der Erfindung betreffen Vorrichtungen, mit denen Parameter des Prozesses erfasst und der Prozess in Abhängigkeit hiervon gezielt gesteuert werden kann. Dies umfasst einerseits eine Vorrichtung zur Erfassung der Oberflächentemperatur des Produktes auf dem Transportband. Eine derartige Vorrichtung kann an einem Punkt des Transportbandes vorgesehen sein; bevorzugt erfolgt eine Beobachtung an verschiedenen Orten im Abstand voneinander. Für die Erfassung der Oberflächentemperatur hat sich der Einsatz von Wärmebildkameras als besonders geeignet erwiesen. Gemäß einer anderen Weiterbildung ist eine Zuführung vorgesehen, um das Produkt zum Transportband zuzuführen. Hierbei ist an der Zuführung bevorzugt eine Vorrichtung zur Produktmengenerfassung vorgesehen. Hierbei kann es sich bspw. um eine Waage zur Erfassung des Gewichts eines partikulären Produkts handeln oder um einen Durchflussmengenmesser für die Erfassung der zugeführten Menge eines flüssigen Produkts.

Weitere erfasste Parameter können die Endtemperatur des Produkts nach Durchlaufen des Bandes, die Endfeuchte etc. sein. Bevorzugt ist eine Steuerungseinheit vorgesehen, die einen oder mehrere der o. g. Parameter verarbeitet und gemäß einem Steuerprogramm einen oder mehrere der folgenden Steuerparameter vorgibt: Temperatur der Kontaktheizung, Temperatur der Strahlheizung, Transportgeschwindigkeit des Transportbandes.

Gemäß einer Weiterbildung der Erfindung ist oberhalb des Transportbandes ein Heizelement mit Lamellen vorgesehen, wobei sich die Lamellen in Richtung des Transportbandes erstrecken. Bevorzugt sind die Lamellen hierbei parallel zur Transportrichtung des Transportbandes ausgerichtet und erstrecken sich bis in eine darauf behandelte Schicht. So ist der Eintrag von Wärmeenergie direkt in die Schicht auch von der Oberseite her möglich. Dies hat insbesondere für partikuläre Produkte den Vorteil, dass ein erheblich größerer Betrag von Wärmeenergie effektiv in die Schicht eingebracht und relativ homogen innerhalb der Schicht verteilt werden kann. Bevorzugt sind eine Anzahl von parallelen Lamellen nebeneinander im Abstand in Querrichtung des Bandes vorgesehen, bspw. mindestens zwei, bevorzugt drei oder mehr Lamellen. Anzahl und Abstand der Lamellen ist bevorzugt der Granulatgröße anzupassen. Die Lamellen erstrecken sich bevorzugt bis knapp vor die Oberfläche des Bandes, so dass ein tiefer Eintrag von Wärmeenergie in eine darauf transportierte Schicht des Produktes (in partikulärer Form) möglich ist. Bspw. kann der Abstand zwischen Band und Lamellen 2-10 mm betragen.

Für einige Typen von Produkten ist nicht lediglich eine Trocknung gewünscht, sondern zusätzlich (oder stattdessen) auch die Durchführung von Reaktionen im Produkt. Derartige Reaktionen können durch die Temperatur-Zeitbelastung (d.h. die gezielte Einwirkung von Heizenergie über einen definierten Zeitraum) ausgelöst werden. Beispiele derartiger Reaktionen und ihrer Auswirkungen sind bspw. gezielte Farbänderungen des Produktes (Bräunung), die Bildung von Reaktionsaromen (z.B. durch Maillard-Reaktion oder Karamellisierung), Enzym-katalysierte Reaktionen (bspw. Umesterung, Hydrolyse, Quer-Vernetzung, Phoshorylierung, De-Phoshorylierung, Hydroxylierung, Glykosylierung, Acetylerung, Deacetylering, Methylerung und/oder Demethylierung). Nachfolgend wird ein Ausführungsbeispiel anhand von Zeichnungen näher beschrieben. Hierbei zeigen
- Fig 1: eine schematische Seitenansicht einer ersten Ausführungsform einer Trocknungsanlage,
- Fig. 2: eine vergrößerte Darstellung eines Teils der Trocknungsanlage aus Fig. 1 mit verschiedenen Behandlungszonen,
- Fig. 3: eine schematische Seitenansicht einer zweiten Ausführungsform einer Trocknungsanlage,
- Fig. 4: eine schematische Seitenansicht einer dritten Ausführungsform einer Trocknungsanlage,
- Fig. 5: in Draufsicht eine Radiatorplatte,
- Fig. 6: einen Querschnitt durch das Band und einen Radiator der Anlage aus Fig. 4,
- Fig. 7: in Diagrammform die Wärmeleitung durch ein Produkt in Abhängigkeit von der Schichthöhe.

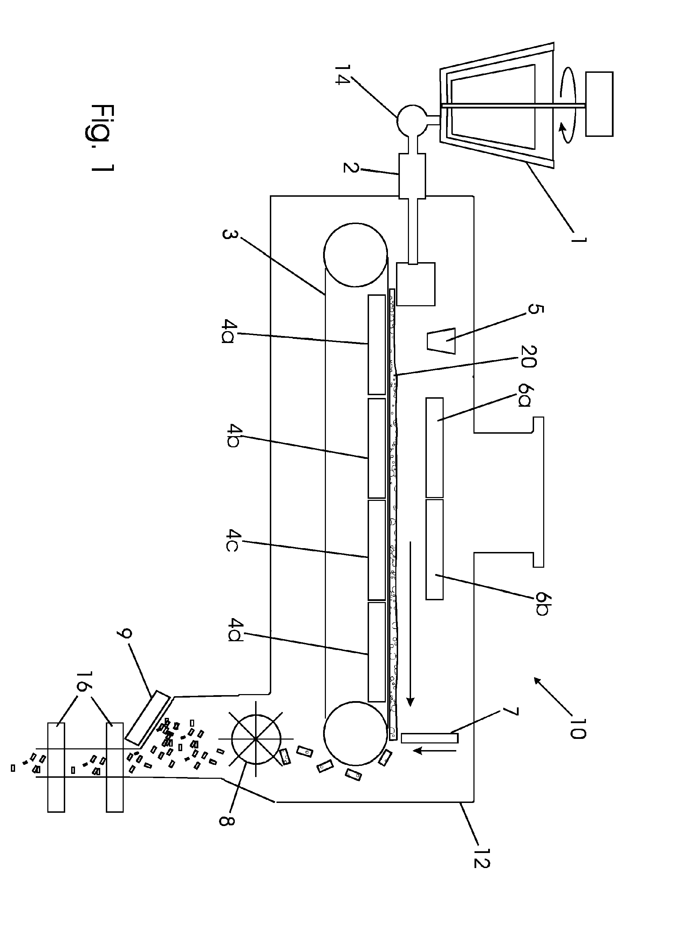

Fig. 1 zeigt in schematischer Seitenansicht eine erste Ausführungsform einer Anlage 10 zur Trocknung eines flüssigen Produkts.

Die Anlage 10 umfasst eine Konditioniervorrichtung 1, in der das flüssige Produkt durch Umwälzung - in diesem Fall durch ein Rührwerk angedeutet - homogenisiert wird.

Das flüssige Produkt wird mittels einer Pumpe 14 durch einen Massemesser 2 in einen Vakuumbehälter 12 dosiert, in dem ein Bearbeitungsdruck von bspw. weniger als 100 mbar herrscht. Am Vakuumbehälter ist eine Vakuumanlage (nicht dargestellt) vorgesehen, um einen gewünschten Behandlungsdruck einzustellen.

Dort wird es auf ein sich in Pfeilrichtung bewegendes Transportband 3 flächig aufgegeben, bspw. durch eine Flächendüse oder durch einen Schwenkarm. Der Auftrag des Produkts erfolgt in einer Schichtdicke von bspw. 3-8 mm.

Das Transportband 3 bewegt sich so, dass die gesamte Strecke in einer vorgegebenen Behandlungsdauer durchlaufen wird. Die Behandlungsdauer wird in Abhängigkeit von den Eigenschaften des Produktes sowie der unten erläuterten weiteren Parameter der Behandlung gewählt.

Während der Behandlungsdauer wird das Produkt, dass sich als eine Schicht 20 auf dem Transportband 3 befindet, durch Beheizung getrocknet. Um die entweichende Feuchtigkeit aus dem Vakuumbehälter 12 zu entfernen, sind ein oder mehrere Kondensatoren (nicht dargestellt) vorgesehen.

Einerseits erfolgt hierbei die Beheizung als Kontaktheizung durch Heizplatten 4a - 4d, die unterhalb des Transportbandes 3 angeordnet sind. Das Transportband 3 läuft direkt auf den Platten 4a-4d. Die Temperatur der Platten wird durch ein durchgeleitetes Wärmemedium, bspw. Dampf, Wasser, Wärmeträgeröl oder Brüden auf einen gewünschten Wert eingestellt.

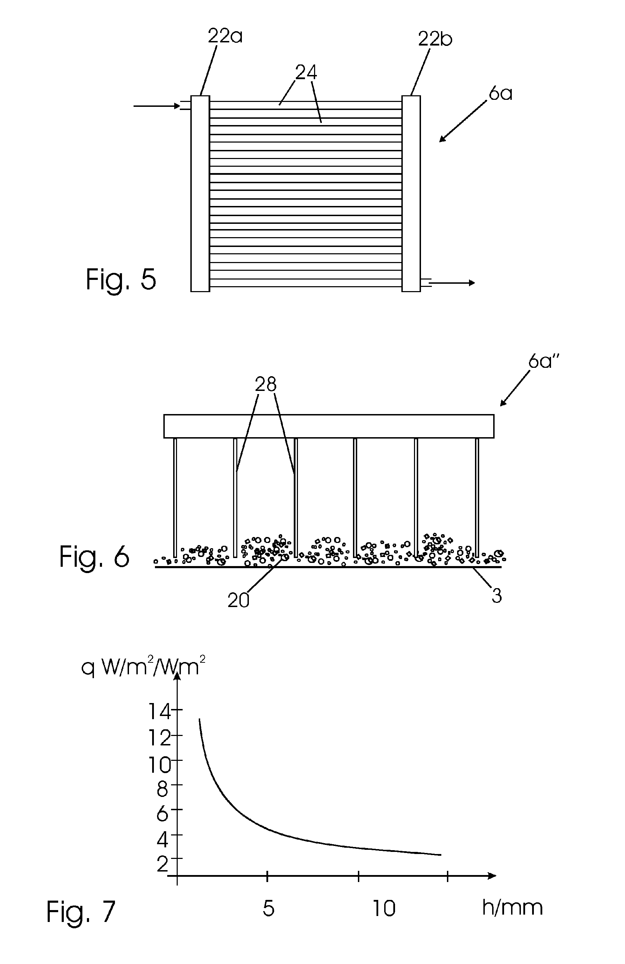

Andererseits erfolgt eine Beheizung als Strahlheizung durch Radiatorplatten 6a, 6b. Fig. 5 zeigt in Draufsicht die Radiatorplatte 6a. Diese umfasst gegenüberliegende Rahmenelemente 22a, 22b, zwischen denen Radiatorrohre 24 parallel verlaufen. Die Beheizung erfolgt auch in diesem Fall durch ein Wärmemedium, das von außerhalb des Vakuumbehälters 12 durch die Radiatorplatte 6a geleitet wird und durch die Radiatorrohre 24 strömt, so dass sich von den Rohren 24 eine Wärmestrahlung auf die Oberfläche des Produktes ergibt. Die Rohre 24 sind bevorzugt schwarz ausgeführt, um eine bessere Abstrahlung zu erreichen. In der Anordnung der Radiatorplatten 6a, 6b oberhalb des Bandes (Fig. 1) sind diese bevorzugt so vorgesehen, dass der Verlauf der Radiatorrohre 24 quer zur Transportrichtung des Bandes verläuft, so dass ein streifenförmiger Energieeintrag vermieden wird.

Die auf dem Band 3 transportierte Schicht 20 wird durch die Beheizung getrocknet. Aufgrund des niedrigen Bearbeitungsdrucks ist der Siedepunkt des im Produkt enthaltenen Wassers erheblich abgesenkt, so dass bei den Beheizungstemperaturen ein Siedevorgang erreicht werden kann, mit dem eine schnelle Trocknung erfolgt.

Die Strahlheizung ist im gezeigten Beispiel über etwa der Hälfe der Bandlänge vorgesehen. In diesem Bereich erfolgt eine gleichzeitige Heizung der Schicht 20 einerseits durch Kontaktwärme aus den Heizplatten 4b, 4c von unten und andererseits durch Strahlwärme der Radiatorplatten 6a, 6b von oben. Wie nachfolgend noch näher erläutert wird, führt der Energieeintrag in die Schicht 20 einerseits zur Trocknung des Produkts. Andererseits ist es - je nach den Eigenschaften des Produkts - möglich, Reaktionen im Produkt hervorzurufen, bspw. Bräunung oder die Bildung von Aromen.

Die Kontaktplatte 4d im Endbereich des Bandes 3 ist als Kühlung vorgesehen. Die Platte 4d ist identisch zu den Platten 4a-4c ausgebildet, wird aber zur Verwendung als Kühlung mit einem Wärmemedium geringerer Temperatur betrieben, so dass sich durch Kontakt mit der Schicht 20 eine Kühlung dieser ergibt.

Am Ende des Transportbandes 3 wird mit einer Zerhackvorrichtung 7 das getrocknete Produkt zerhackt und vom Band 3 gelöst. In einer Mahlvorrichtung 8 wird es gemahlen und über eine Schleuse 16 aus dem Vakuumbehälter 12 ausgeschleust.

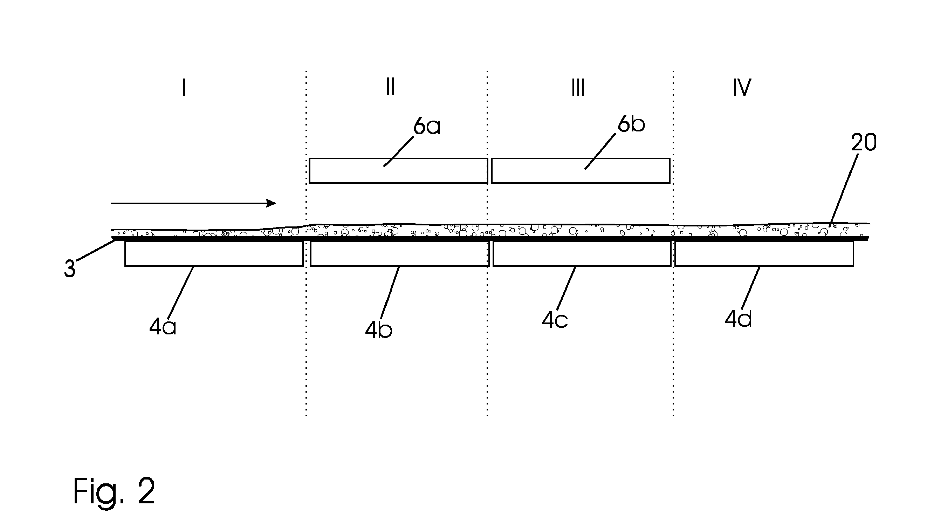

Beim Transport durch das Band 3 durchläuft das Produkt dabei verschiedene Behandlungszonen, in denen es verschiedenen Bedingungen ausgesetzt wird. In Fig. 2 sind die aufeinanderfolgenden Behandlungszonen I - IV dargestellt. Diese sind bevorzugt im Wesentlichen (d.h. mit einer Abweichung von bevorzugt nicht mehr als +/- 10%) gleich lang. Selbstverständlich können alternative Vorrichtungen und Verfahren definiert werden, in denen die Behandlungszonen unterschiedlich lang sind.

In einer ersten Behandlungszone I erfolgt eine Beheizung nur von unten durch die Kontaktheizung 4a. Diese ist auf eine erste Heiztemperatur von bspw. 140°C eingestellt. In der ersten Behandlungszone wird der größte Anteil an Wasser aus dem Produkt entfernt. Die Temperatur des Produktes steigt dabei nur relativ geringfügig an, da sich durch die Verdunstung des Wassers eine Kühlung ergibt.

Erst in einer zweiten Behandlungszone II zeigt sich ein Anstieg der Temperatur des Produkts. Hier erfolgt zusätzlich zu einer Kontaktheizung auf einer zweiten Heiztemperatur (bspw. 140°C) eine Beheizung durch die Strahlheizung 6a von oben mit einer ersten Strahlheizungstemperatur von bspw. 130°C .

In einer dritten Behandlungszone III erfolgt ebenfalls eine Kontaktheizung auf einer dritten Heiztemperatur, die geringer ist als die zweite Heiztemperatur (bspw. 120°C) und eine Beheizung durch die Strahlheizung 6a von oben mit einer zweiten Strahlheizungstemperatur, die bspw. ebenfalls 130°C beträgt.

Schließlich erfolgt in der vierten Behandlungszone IV eine Kühlung des Produkts durch eine Kontaktplatte 4d, die auf eine Kühltemperatur eingestellt wird von bspw. 50°C. Durch diese Behandlung erfolgt eine effektive Trocknung des Produkts, bei der sich über die gesamte Schichtdicke homogene Eigenschaften einstellen.

Die dargestellte Vorrichtung umfasst eine Steuerung (nicht dargestellt), mit der verschiedene Parameter des Produkts erfasst werden und in Abhängigkeit von einem Steuerprogramm Parameter des Prozesses eingestellt werden. Insbesondere verarbeitet die Steuereinheit als Eingangsdaten die am Durchflussmengenmesser 2 festgestellte Durchflussmenge und regelt die Pumpe 4 so, dass ein vorgegebener Wert erreicht wird. Weiter verarbeitet die Steuerungseinheit die Werte von Temperatursensoren 5, die innerhalb des Vakuumbehälters 12 angeordnet sind. Die Temperatursensoren 5 sind bevorzugt Wärmebildkameras, die die Oberfläche der Schicht 20 erfassen und deren Temperatur feststellen. Während in Fig. 1 beispielhaft nur ein Temperatursensor 5 dargestellt ist, sind bevorzugt über die Bandlänge mehrere Sensoren, bspw. ein Sensor je Behandlungszone vorgesehen, deren Messwerte durch die Steuereinheit verarbeitet werden. Weiter werden in einem Mikrowellen-Messgerät 9 die Endfeuchte des getrockneten Produkts und dessen Endtemperatur erfasst. Als Steuergrößen gibt die Steuereinheit die Heiztemperaturen der Kontaktplatten 4a-4c sowie die Kühltemperatur der Kontaktplatte 4d und die Heiztemperaturen der Radiatoren 6a, 6b vor. Des Weiteren wird die Bandgeschwindigkeit geregelt.

Die Regelung der Anlage erfolgt bevorzugt mit dem Ziel einer vorgegebenen gewünschten Restfeuchte unter Berücksichtigung einer maximalen Produkt-Oberflächentemperatur. Maximale Oberflächentemperaturen werden für die einzelnen Zonen vorgewählt. Im Betrieb werden Kontakt- und Strahlheizung so angesteuert, dass die Maximaltemperaturen nicht überschritten werden. Sind die vorgegebenen maximalen Produkt-Oberflächentemperaturen erreicht, wird durch eine Verlängerung der Trocknungszeit und Reduzierung der Produkteinspeisung die passende Restfeucht erzielt.

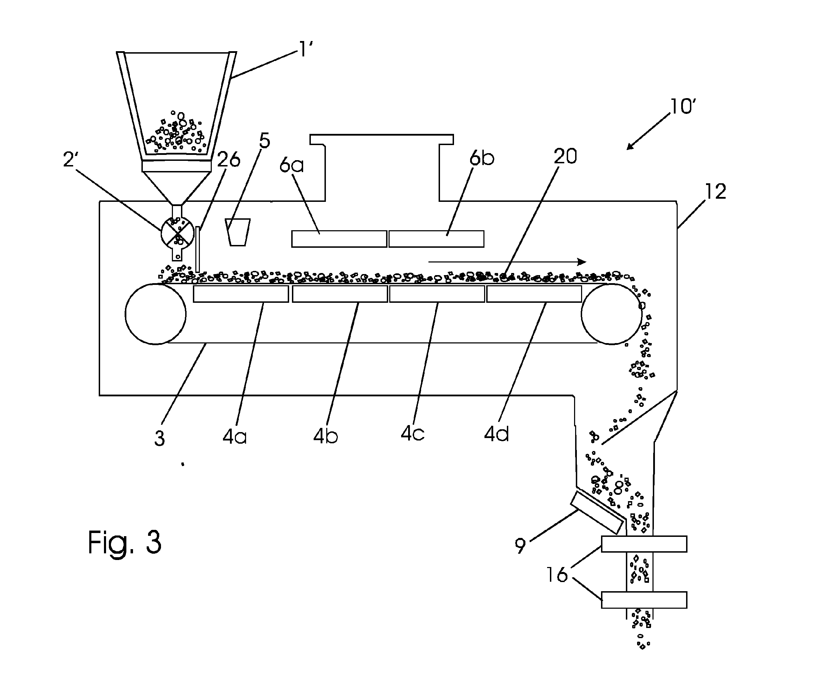

Fig. 3 zeigt in einer schematischen Ansicht eine zweite Ausführungsform einer Trocknungsanlage 10' für ein partikuläres Produkt. Die zweite Ausführungsform der Trocknungsanlage 10' stimmt in vielen Elementen mit der ersten Ausführungsform überein, was durch die Verwendung gleicher Bezugszeichen angezeigt ist. Im Folgenden werden lediglich die Unterschiede zur ersten Ausführungsform erläutert.

Die Zuführung des Produkts in partikulärer Form, bspw. als Granulat, erfolgt aus einem Produktvorlagebehälter 1', in dem zuvor eine Konditionierung des Produktes erfolgen kann. Das Produkt wird durch eine mit einer Waage versehene Fördereinrichtung 2' auf das Band 3 dosiert, so dass sich eine Schicht 20 auf dem Band 3 ergibt.

Die Trocknung der Schicht 20 erfolgt in gleicher Weise wie oben für das erste Ausführungsbeispiel beschrieben. Auch hier erfolgt ein Energieeintrag in die Schicht 20 einerseits durch Kontaktheizung 4a-4d und andererseits durch Strahlheizung 6a, 6b. Aufgrund der hierdurch gewährleisteten guten Durchdringung kann eine relativ große Schichthöhe gewählt werden, die durch ein Wehr 26 einzustellen ist. Schichthöhen liegen bevorzugt im Bereich von 1-50mm.

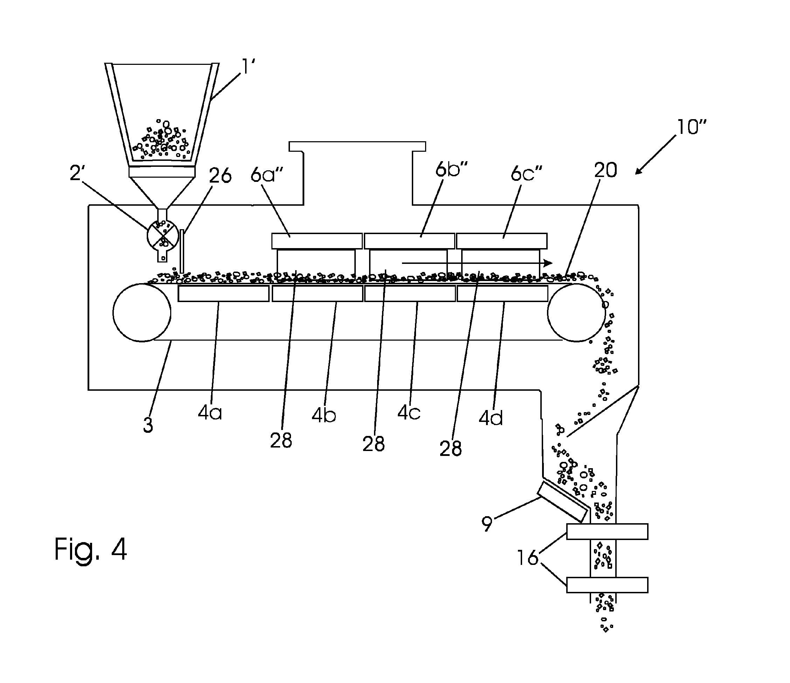

Fig. 4 zeigt eine bevorzugte dritte Ausführungsform einer Trocknungsanlage 10" für partikuläre Produkte. Die Trocknungsanlage 10" gemäß der dritten Ausführungsform stimmt weitgehend mit der Anlage 10' gemäß der zweiten Ausführungsform überein, was durch die Verwendung gleicher Bezugszeichen für gleiche Elemente angezeigt ist. Im Folgenden werden lediglich die Unterschiede zur zweiten Ausführungsform erläutert.

Bei der Trocknungsanlage 10" weisen die über dem Band 3 angeordneten Radiatoren 6a", 6b", 6c" Lamellen 28 auf, die sich von der Fläche der Radiatoren 6a", 6b", 6c" in Richtung auf die Oberfläche des Bandes 3 erstrecken und die parallel zur Transportrichtung der Schicht 20 auf dem Band 3 angeordnet sind. Wie in Fig. 6 im Querschnitt durch das Band 3 dargestellt, umfasst jeder der Radiatoren 6a", 6b", 6c" mehrere parallele, im Abstand quer zur Laufrichtung des Bandes 3 angeordnete Lamellen 28. Diese enden in einem geringen Abstand vor dem Band 3; berühren dieses also knapp nicht. Sie erstrecken sich aber bis in den Bereich der Schicht 20.

Im Übrigen können die Radiatoren 6a", 6b", 6c" wie in Fig. 5 gezeigt mit Radiatorrohren 24 gebildet werden, an denen - parallel oder quer hierzu - die Lamellen 28 befestigt werden. Somit erfolgt eine Beheizung der Schicht 20 durch die Radiatoren 6a", 6b", 6c" einerseits durch Strahlbeheizung und andererseits durch Kontaktwärme an den Lamellen 28. Hierdurch ist ein besonders effektiver Eintrag von Wärme in die Schicht 20 gewährleistet.

Je nach Vorgabe durch die Steuereinheit kann in diesem Fall im letzten Bearbeitungsabschnitt auch eine Kühlung durch den Radiator 6c" durch Wärmeleitung an den Lamellen 28 erfolgen.

Fig. 7 zeigt den Zusammenhang der Wärmeleitung durch ein Produkt bezogen auf die Schichthöhe für den Fall der reinen Wärmeleitung. Ausgehend von üblichen Schichthöhen 10 - 20 mm kann bei geringeren Höhen 1- 5 mm ein Mehrfaches an Energie ins Innere der Schicht transportiert werden.

Nachfolgend werden einige Beispiele für Produkte und entsprechende Trocknungsprozesse gegeben.

### Produktbeispiel 1 : Trocknung mittels Kontakt und Stahlungswärme (entsprechend dem obigen ersten Ausführungsbeispiel)

Produkt: Trocknen von Malzkonzentrat flüssig mit 70% Feststoffanteil, Dichte 1,12 kg/l mit der Zielsetzung, durch Trocknungsbehandlung das Karamellisieren, Produktfarbe, Dichte und Geschmack einzustellen.
Produkt Vorwärmen: 45°C
Produktdosierung mittels feststehendem Auftragssystem für dünne Schichten Auftrag Schichthöhe auf dem Band: 1,5 mm
Trocknungszeit: 13 min
Vakuum: 50 mbar
Kontaktwärme unter dem Band Zone I bis IV : 130°C / 130°C / 80°C / 40°C Strahlungswärme über dem Band Zone II bis IV: 140°C / 100°C / 40°C Getrocknetes Produkt: Restfeuchte : 2%
Dichte: 0,85 kg/l

### Produktbeispiel 2: Trocknung mittels Kontakt und Strahlungswärme

Produkt: Apfeltrester - Flüssigprodukt mit partikulärem Feststoffanteil 58% Feststoffanteil

Produktdosierung mittels geeigneter Fest-Flüssig Druckdosierung Auftrag Schichthöhe auf dem Band: 20 mm
Trocknungszeit: 2,2 Std.
Vakuum: 15 mbar
Kontaktwärme unter dem Band Zone I bis IV150°C / 130°C / 100°C / 30°C Strahlungswärme von oben Zone I bis IV 150°C / 150°C / 120°C / 50°C Getrocknetes Produkt: 2,5 % Restfeuchte

### Beispiel 3 : Gefriertrocknung von Kaffee Granulaten mittel Kontakt- Strahlungswärme und Lamellen in dem Produkt.

### (entsprechend dem obigen dritten Ausführungsbeispiel)

Produkt: Kaffeeextrakt 48% Feststoffanteil Dichte von 1,2 kg/l Vorbehandlung/ Konditionierung:
a Vorfrieren des Kaffee Extrakt auf minus 5 °C ,
b Einstellen der Dichte mittels Zugabe von CO₂ 0,85 kg/l
c Einfrieren des Granulates auf minus 50 °C
d Mahlen und Herstellen der Granulate 0,5-3mm

Dosierung in den Trockner:
a Wiegen der Granulate in einem Vorlagebehälter
b Dosieren der Granulate mittels Zellradschleuse in den Trockner

Einstellungen für den Trocknungsprozess

| | |
|---|---|
| Vakuum : | 0,35 mbar |
| Trocknungszeit : | 4,5 Stunden |
| Schichthöhe auf dem Band : | 40 mm |
| Kontaktwärme unter dem Band Zone I-IV: | -25°C / 50°C / 80°C / 60 °C |

Strahlungswärme kombiniert mit Kontaktwärme durch Lamellen in das Produkt: Temperaturen in den Zonen I-IV: -25°C / 70°C / 100°C / 80°C
Restfeuchte Trockenprodukt : 2,5 %

Zu den gezeigten und beschriebenen Ausführungen von Trocknungsanlagen und Trocknungsprozessen sind verschiedene Änderungen, Ergänzungen und Erweiterungen möglich. Insbesondere können mehrere Transportbänder jeweils mit Strahl- und Kontaktheizung übereinander angeordnet sein. Hierbei kann das Produkt auf den Transportbändern parallel getrocknet werden, es ist auch möglich dass das Produkt die Bänder im Wechselfluss durchläuft. Statt unter dem angegebenen Vakuum kann die Bearbeitung auch bei anderen Bearbeitungsdrücken erfolgen. Ebenso sind die angegebenen Temperaturen je nach den Eigenschaften der jeweiligen Produkte anders einzustellen.

## Patentansprüche

1. Vorrichtung zur Trocknung eines fluiden oder partikulären Produkts mit
- einem Transportband (3) zum Transport des Produktes,
- einer unter dem Transportband (3) vorgesehenen Kontaktheizung (4a-4d), um das Produkt beim Transport zu heizen,
- und einer über dem Transportband vorgesehener Strahlheizung (6a-6c), um das Produkt beim Transport zu heizen.

2. Vorrichtung nach Anspruch 1, bei der
- das Transportband (3) in einem Druckraum (12) mit einer Vakuumanlage zur Herstellung eines gewünschten Bearbeitungsdrucks angeordnet ist.

3. Vorrichtung nach einem der vorangehenden Ansprüche, bei der
- am Transportband (3) mindestens zwei Behandlungszonen (I-IV) mit unterschiedlicher Beheizung vorgesehen sind.

4. Vorrichtung nach Anspruch 3, bei der
- in einer ersten Behandlungszone (I) nur eine Kontaktheizung (4a) vorgesehen ist,
- und in einer zweiten Behandlungszone (II), die in Transportrichtung des Transportbandes (3) hinter der ersten Behandlungszone (I) angeordnet ist, eine Kontaktheizung von unten und eine Strahlheizung von oben vorgesehen ist.

5. Vorrichtung nach einem der vorangehenden Ansprüche, bei der
- eine Kühlzone (II) mit einem unter dem Transportband vorgesehenen Kühlkörper (4d) vorgesehen ist.

6. Vorrichtung nach einem der vorangehenden Ansprüche, bei der
- für die Strahlheizung mindestens ein im Abstand über dem Transportband (3) angeordneter Radiator (6a, 6b, 6c) vorgesehen ist.

7. Vorrichtung nach Anspruch 6, bei der
- der Radiator (6a-6c) in einem Abstand von 10-200mm über der Ebene des Transportbandes angeordnet ist.

8. Vorrichtung nach einem der vorangehenden Ansprüche, bei der
- eine Konditioniervorrichtung vorgesehen ist, in der das Produkt vor der Aufgabe auf das Transportband (3) konditioniert wird.

9. Vorrichtung nach einem der vorangehenden Ansprüche, bei der
- eine Vorrichtung (5) zur Erfassung der Oberflächentemperatur des Produktes auf dem Transportband (3) vorgesehen ist.

10. Vorrichtung nach einem der vorangehenden Ansprüche, bei der
- eine Steuerungseinheit vorgesehen ist zur Vorgabe von mindestens der Temperatur der Kontaktheizung, der Temperatur der Strahlheizung und der Transportgeschwindigkeit des Transportbandes (3).

11. Vorrichtung nach einem der vorangehenden Ansprüche, bei der
- eine Zuführung vorgesehen ist um das Produkt zum Transportband (3) zuzuführen,
- wobei an der Zuführung eine Vorrichtung zur Produktmengenerfassung (2, 2') vorgesehen ist.

12. Vorrichtung nach einem der vorangehenden Ansprüche, bei der
- über dem Transportband (3) ein Heizelement (6c) mit Lamellen (28) vorgesehen ist, die sich in Richtung des Transportbandes (3) erstrecken.

13. Verfahren zur Trocknung eines fluiden oder partikulären Produkts, bei dem
- das Produkt auf ein Transportband (3) gegeben und auf diesem transportiert wird,
- wobei das Produkt durch eine unter dem Transportband (3) vorgesehene Kontaktheizung (4a-4d) beim Transport geheizt wird,
- und wobei das Produkt durch eine über dem Transportband vorgesehene Strahlheizung (6a-6c) beim Transport geheizt wird.

14. Verfahren nach Anspruch 13, bei dem
- das Produkt auf dem Transportband (3) mindestens zwei aufeinanderfolgende Behandlungszonen (I-IV) durchläuft,
- wobei in den Behandlungszonen die Beheizung unterschiedlich eingestellt ist.

15. Verfahren nach Anspruch 13 oder 14, bei dem
- die Kontaktheizung auf eine Heiztemperatur von -25 bis 160°C eingestellt ist.

16. Verfahren nach einem der Ansprüche 13-15, bei dem
- die Strahlheizung auf eine Heiztemperatur von -25 bis 160°C eingestellt ist.

17. Verfahren nach einem der Ansprüche 13-16, bei dem
- das Produkt als Schicht (20) einer Schichthöhe von 1-50 mm auf das Transportband aufgegeben wird.

18. Verfahren nach einem der Ansprüche 13-17, bei dem
- durch die Beheizung im Produkt eine Reaktion hervorgerufen wird bei der Reaktionsaromen gebildet werden.
